# EUROPÄISCHE PATENTSCHRIFT

(11) **EP 4 259 476 B1**
(45) Veröffentlichungstag und Bekanntmachung des Hinweises auf die Patenterteilung: **02.09.2026**
(21) Anmeldenummer: 21819734.1
(22) Anmeldetag: 18.11.2021
(51) Int. Cl.: B60L 53/22, B60L 53/30, H02J 7/22

(54) **LADESTEUERUNGSMODUL, LADESTATION UND LADESYSTEM ZUR STEUERUNG VON LADEVORGÄNGEN VON TRAKTIONSENERGIESPEICHERN FÜR ELEKTROFAHRZEUGE**
CHARGING CONTROL MODULE, CHARGING STATION, AND CHARGING SYSTEM FOR CONTROLLING CHARGING PROCESSES OF TRACTION ENERGY STORAGE MEANS FOR ELECTRIC VEHICLES
MODULE DE COMMANDE DE CHARGE, STATION DE CHARGE, ET SYSTÈME DE CHARGE POUR COMMANDER DES PROCESSUS DE CHARGE DE MOYENS DE STOCKAGE D'ÉNERGIE DE TRACTION POUR VÉHICULES ÉLECTRIQUES

(30) Priorität: 10.12.2020 DE 102020132915
(43) Veröffentlichungstag der Anmeldung: 18.10.2023
(73) Patentinhaber: Phoenix Contact e-Mobility GmbH, 32816 Schieder-Schwalenberg (DE)
(72) Erfinder: SANDER, Christian, 32694 Dörentrup (DE); ROSE, Markus, 33189 Schlangen (DE); TEMME, Thorsten, 30459 Hannover (DE)
(74) Vertreter: Meyer-Graefe, Karsten
(86) Internationale Anmeldenummer: PCT/EP2021/082099
(87) Internationale Veröffentlichungsnummer: WO 2022/122334

(56) Entgegenhaltungen:
- EP-B1- 2 736 062
- CN-A- 105 449 791
- DE-A1- 102018 121 632
- TW-A- 201 124 332
- US-A1- 2011 014 501
- US-A1- 2019 351 783

## Beschreibung

Die Erfindung betrifft ein Ladesteuerungsmodul für einen Ladepunkt eines Traktionsenergiespeichers eines Elektrofahrzeugs. Das Ladesteuerungsmodul umfasst ein auf einer Tragschiene montiertes oder montierbares Gehäuse. Das Ladesteuerungsmodul umfasst ferner eine am oder im Gehäuse angeordnete erste Datenschnittstelle. Die erste Datenschnittstelle ist dazu ausgebildet, mit einer Zentralfunktion für eine Mehrzahl von Ladesteuerungsmodulen Daten des Ladevorgangs auszutauschen. Ferner umfasst das Ladesteuerungsmodul eine im Gehäuse angeordnete Steuereinheit. Die Steuereinheit ist dazu ausgebildet, den Ladevorgang des Traktionsenergiespeichers abhängig von den über die erste Datenschnittstelle mit der Zentralfunktion ausgetauschten Daten des Ladevorgangs zu steuern. Die Erfindung betrifft weiter eine Ladestation umfassend eine Mehrzahl von Ladepunkten sowie ein System umfassend eine Vielzahl von Ladestationen.

Als Ladestation wird in der Elektrotechnik jedwede stationäre Vorrichtung oder elektrische Anlage bezeichnet, welche dazu dient, mobilen akku-betriebenen Geräten, Maschinen oder Kraftfahrzeugen durch einfaches Einstellen oder Einstecken Energie zuzuführen, ohne den Energiespeicher - etwa die Traktionsbatterie eines Elektroautos - entnehmen zu müssen. Ladestationen für Elektroautos werden umgangssprachlich auch als "Stromtankstellen" bezeichnet und können mehrere Ladepunkte umfassen. Je nach Bauform können Ladestationen auch als "Ladesäulen" bezeichnet werden.

Im Stand der Technik sind Ladestationen für Elektrofahrzeuge herkömmlicherweise so aufgebaut, dass an einer Ladestation ein oder mehrere Elektrofahrzeuge geladen werden können. Hierfür wird eine Steuerungstechnik eingesetzt, die sowohl Funktionen aufweist, die für jeden Ladepunkt benötigt werden (z.B. Kommunikation zum Fahrzeug, Energiemessung, Ansteuerung der Steckerverriegelung, etc.), als auch Funktionen, die nur einmal pro Ladestation benötigt werden (z.B. Kommunikation zu einem Abrechnungssystem, Bedienerinterface, etc.). Beispiele des herkömmlichen Aufbaus sind eine Ladesteuerung für einen Ladepunkt, in die allen Funktionen integriert sind; eine Ladesteuerung für einen Doppelladepunkt, in die alle notwendigen Funktionen integriert sind; zwei separate, technisch ähnliche Ladesteuerungen für einen Doppelladepunkt, die als Master und Slave miteinander verbunden werden; und zwei Ladesteuerungen für Ladevorgänge mit einer zusätzlichen überlagerten Steuerung für zentral genutzte Funktionen.

Das Dokument DE 10 2018 116 947 A1 beschreibt eine vertikale "Schublade" für eine Ladesäule. Diese Mechanik umfasst eine elektrisch isolierende vertikale Trägerplatte, die auf horizontalen Schienen zum Herausfahren aus einer an einer Seite der Ladesäule angeordneten Tür montiert ist. Durch die Trägerplatte wird eine Kriech- und Luftstrecke eines Kabelschienenschachts an der innenseitigen Rückwand an der Ladesäule verlängert, während auf der Vorderseite der Trägerplatte eine Ladesäulensteuerung montiert ist. Die eigentliche Leistungselektronik ist mangels Bauraum in eine andere Einheit ausgelagert. Ein Aufbau entsprechend dem in der Elektrotechnik üblichen Schaltschrankbau ist nach der Lehre des Dokuments schwerlich anwendbar.

Das Dokument DE 10 2017 214 071 A1 beschreibt ein Verfahren zum Laden eines Elektrofahrzeugs, bei dem ein ausgelagertes Rechenzentrum (eine sogenannte "Cloud") sowohl über WLAN oder Ethernet mit einer Ladestation in Datenverbindung steht als auch über WLAN oder Mobilfunk mit dem Elektrofahrzeug in Datenverbindung steht, ohne dass eine direkte Datenverbindung zwischen der Ladestation und dem Elektrofahrzeug zustande kommt. Der Ladevorgang wird aufgrund der vom Elektrofahrzeug über die Datenverbindung an die "Cloud" gelieferten Ladebedarfsparameter durch das Rechenzentrum gesteuert.

Weitere Ladesteuerungsmodule sind aus der DE 10 2018 121 632 A1, US 2011/014501 A1, US 2019/351783 A1, TW 201124332 A und EP 2 736 062 B1 bekannt.

Um Ladepunkte zu vernetzen und so z.B. einen Doppelladepunkt aufzubauen, ist herkömmlicherweise eine Verdrahtung mittels Leitungen und optional eine komplizierte Anbindung an einen Industrie-PC o.ä. für die übergeordnete Steuerung nötig. Dieses führt dazu, dass in Installationen teilweise Funktionen mehrfach vorhanden sind, aber nur einmal benötigt werden.

Der Erfindung liegt daher die Aufgabe zugrunde, eine resourceneffiziente Technik zum Aufbau mehrerer Ladepunkte bereitzustellen. Eine Alternative oder spezifischere Aufgabe ist, ein Ladesteuerungsmodul, eine mehrere Ladesteuerungsmodule umfassende Ladestation und ein Ladesystem umfassend mehrere Ladestationen zur Verfügung zu stellen, welche es ermöglichen, einen Parkplatz oder eine Parkanlage, beispielsweise eine Tiefgarage oder ein Parkhaus, mit mehreren Ladepunkten derart auszurüsten und/oder zu erweitern, dass sowohl ein zentrales Ladesystem als auch ein dezentral verteiltes Ladesystem ermöglicht ist. Alternativ oder ergänzend besteht die technische Aufgabe, eine hinsichtlich Aufbau, Wartung, Erweiterung und/oder Austausch einzelner Komponenten modulare und leicht konfigurierbare Ladesystem-Architektur bereitzustellen.

Die Aufgabe wird bzw. die Aufgaben werden mit den Merkmalen der unabhängigen Ansprüche gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Gemäß einem ersten Aspekt zeichnet sich die Erfindung dadurch aus, dass das Gehäuse auf einer Tragschiene montiert oder montierbar ist, wobei die Mehrzahl von Ladesteuerungsmodulen das die Zentralfunktion umfassende Ladesteuerungsmodul und mindestens ein weiteres Ladesteuerungsmodule ohne Zentralfunktion umfasst. Eine am Gehäuse angeordnete zweite Datenschnittstelle, die mit der ersten Datenschnittstelle des mindestens einen weiteren Ladesteuerungsmoduls verbunden oder verbindbar ist, und die dazu ausgebildet ist, die Daten des Ladevorgangs des mindestens einen weiteren Ladesteuerungsmoduls mit der Zentralfunktion auszutauschen.

Die Steuereinheit kann eine Stromsteuereinheit zur Steuerung eines Ladestroms umfassen. Die Stromsteuereinheit kann mit einem elektrischen Steckkontakt verbunden sein. Der elektrische Steckkontakt kann als Ladestecker (kurz: Stecker) ausgebildet sein. Der elektrische Steckkontakt kann zu einer Gleichstromverbindung oder eine Wechselstromverbindung zwischen dem Ladepunkt und dem Traktionsenergiespeicher des Elektrofahrzeugs (beispielsweise zum Laden oder Entladen des Traktionsenergiespeichers) ausgebildet sein.

Der Stecker kann gemäß der Norm IEC 62196 Typ 2 oder gemäß dem "Combined Charging System" (CCS) ausgebildet sein.

Neben Lastkontakten zur Leitung des Ladestroms kann der elektrische Steckkontakt einen oder mehrere Signalkontakte umfassen, beispielsweise für ein Signal "Pilot Control" (PC) und/oder für ein Signal "Proximity Pilot" (PP). Die Stromsteuereinheit kann (beispielsweise ausschließlich) mit dem oder den Signalkontakten des elektrischen Steckkontakts elektrisch leitend verbunden sein. Alternativ oder ergänzend können die Lastkontakte des elektrischen Steckkontakts mit einem Ladeschütz elektrisch leitend verbunden sein, das von der Stromsteuereinheit gesteuert ist.

Eine Ladestation (beispielsweise Ladesäule) kann einen Ladepunkt oder eine Mehrzahl von Ladepunkten (beispielsweise zwei, drei oder vier Ladepunkte) umfassen. Jedem Ladepunkt kann ein Ladesteuerungsmodul innerhalb der Ladestation (beispielsweise der Ladesäule) zugeordnet sein. Das Ladesteuerungsmodul und/oder der zugeordnete Ladepunkt können zum konduktiven Laden, beispielsweise gemäß der Norm DIN EN 61851-1, ausgebildet sein.

Die Ladestation, oder eine der Ladestationen oder jede Ladestation kann als eine Ladesäule ausgebildet sein.

Das Ladesteuerungsmodul (beispielsweise die Steuereinheit) kann dazu ausgebildet sein, Ladepunkt-spezifische Schritte oder Funktionen (auch: "dezentrale Funktionen") des Ladevorgangs zu steuern (beispielsweise zu regeln in bidirektionaler Kommunikation mit dem Elektrofahrzeug oder einem Batteriemanagementsystem, BMS, des Traktionsenergiespeichers). Alternativ oder ergänzend kann die Zentralfunktion für die Mehrzahl von Ladesteuerungsmodulen Schritte oder Funktionen (auch: "zentrale Funktionen") des Ladevorgangs steuern, beispielsweise die nicht notwendigerweise einem einzelnen Ladepunkt zugeordnet sind und/oder nicht zeitgleich von mehreren Ladepunkt derselben Ladestation benötigt werden.

Dezentrale Funktionen eines Ladevorgangs können mindestens eine der folgenden Funktionen umfassen: das Steuern des Ladestrom, beispielsweise das Steuern (auch: Schützsteuerung) eines Ladeschütz (beispielsweise eines Schaltschütz des Ladestroms); ein Messen eines Differenzstroms (beispielsweise am oder über den elektrischen Steckkontakt); ein Steuern und/oder Auslesen einer Differenzstrommesseinrichtung zum Messen des Differenzstroms; ein Steuern und/oder Überwachen eines Verriegelungsaktuators; ein Messen einer in dem Traktionsenergiespeicher gespeicherten Energie und/oder einer beim Ladevorgang an den Traktionsenergiespeicher übertragenen Energie; ein Steuern und/oder Auslesen einer Energiemesseinrichtung zur Messung der in dem Traktionsenergiespeicher gespeicherten Energie und/oder der beim Ladevorgang an den Traktionsenergiespeicher übertragenen Energie; ein berührungsloses oder kontaktloses Erfassen einer Kennung (beispielsweise des Elektrofahrzeugs oder eines Benutzers des Ladepunkts); und/oder ein Steuern oder Auslesen einer Kennungserfassungseinrichtung zur Erfassung der Kennung (d.h. zur Identifizierung), beispielsweise mittels elektromagnetischer Wellen (vorzugsweise mittels Nahfeldkommunikation).

Die Kennungserfassungseinrichtung kann auch als Radio-Frequenz-Identifikator oder RFID-Leser bezeichnet werden.

Der Differenzstrom kann einen Kriechstrom oder Fehlerstrom umfassen. Eine Differenzstrommesseinrichtung kann auch fachsprachlich als Residual Current Monitor (RCM) bezeichnet werden.

Die Steuereinheit kann dazu ausgebildet sein, Daten und/oder Steuersignale einer oder mehrerer dezentraler Funktionen an die Stromsteuereinheit weiterzuleiten. Beispielsweise kann die Steuereinheit ein "Stopp"-Signal zur Unterbrechung und/oder Beendigung des Ladevorgangs an die Stromsteuereinheit senden, wenn eine vorgegebene Schwelle eines Differenzstroms überschritten ist und/oder wenn der Traktionsenergiespeicher des Elektrofahrzeugs einen vorgegebenen Ladezustand (auch: Füllstand, beispielsweise: "voll") erreicht hat.

Alternativ oder ergänzend kann die Steuereinheit dazu ausgebildet sein, Daten und/oder Steuersignale der Zentralfunktion an die Stromsteuereinheit weiterzuleiten. Beispielsweise kann die Steuereinheit ein Signal zur Ladefreigabe (d.h. zum Start des Ladevorgangs) an die Stromsteuereinheit senden.

Alternativ oder ergänzend kann die Zentralfunktion (beispielsweise die zentrale Funktionen) eines Ladevorgangs eine Benutzerschnittstelle (auch: "Bedienschnittstelle"), und/oder den RFID-Leser, und/oder ein Abrechnungssystem umfassen. Beispielsweise kann über die Benutzerschnittstelle ein Sollwert des Ladezustands (beispielsweise: "voll") des Traktionsenergiespeichers des Elektrofahrzeugs zur Beendigung des Ladevorgangs vorgegeben werden. Alternativ oder ergänzend kann der Sollwert des Ladezustands, beispielsweise eine Strommenge (oder elektrische Ladung) oder Energie (optional anhand eines vorgegebenen Zahlungsbetrags und eines Strompreises) an der Benutzerschnittstelle erfasst werden. Weiterhin alternativ oder ergänzend kann von der Zentralfunktion ein zeitlicher Verlauf und/oder eine (beispielsweise von der Zeit des Ladevorgangs und/oder dem Ladezustand des Traktionsenergiespeichers abhänge) Stromstärke für das Steuern des Ladevorgang bestimmt und/oder an die Steuereinheit des Ladesteuerungsmoduls kommuniziert werden. Beispielsweise kann über die Benutzerschnittstelle eine maximale Ladezeit für den Traktionsenergiespeicher des Elektrofahrzeugs bestimmt werden. Alternativ oder ergänzend können Ladeströme für mehrere an einer Ladestation oder Ladesäule angeordnete Ladepunkte anhand eines maximalen Gesamtladestroms bestimmt werden. Der Gesamtladestrom kann eine Summe der Ladeströme aller Ladepunkte an einer Ladestation oder Ladesäule umfassen. Der maximale Gesamtladestrom kann für die Ladestation oder Ladesäule vorgegeben sein.

Ein Ladesteuerungsmodul, das nur dezentrale Funktionen umfasst, kann auch als "Slave-Modul" bezeichnet werden. Alternativ oder ergänzend kann ein Ladesteuerungsmodul, das (beispielsweise zumindest teilweise und/oder zumindest einige aus einer Menge von) zentrale Funktionen umfasst, als "Master-Modul" bezeichnet werden. Weiterhin alternativ oder ergänzend kann eine Ladestation oder eine Ladesäule eine Mehrzahl von Slave-Modulen sowie ein Master-Modul umfassen.

Die erste Datenschnittstelle kann eine Datenschnittstelle zwischen einem oder jedem Slave-Modul und dem Master-Modul umfassen, beispielsweise eine Datenschnittstelle am Slave-Modul zum Austausch von Daten mit dem Master-Modul.

Die erste Datenschnittstelle eines Slave-Moduls kann am Gehäuse angeordnet sein. Alternativ oder ergänzend kann die erste Datenschnittstelle des Master-Moduls im Gehäuse (beispielsweise als interne oder virtuelle Schnittstelle zwischen den dezentralen Funktionen des Master-Moduls und den zentralen Funktionen des Master-Moduls) angeordnet sein.

Das Master-Modul kann eine zweite Datenschnittstelle umfassen, beispielsweise die am Gehäuse des Master-Moduls angeordnet ist. Die zweite Datenschnittstelle des Master-Moduls kann zur Kommunikation mit der ersten Datenschnittstelle eines oder jedes Slave-Moduls (beispielsweise derselben Ladestation) ausgebildet sein.

Das Master-Modul kann baugleich zu einem Slave-Modul sein. In einem Slave-Modul können die dezentralen Funktionen aktiviert und die zentralen Funktionen deaktiviert sein. In dem Master-Modul können die dezentralen und (beispielsweise mindestens ein Teil der) zentralen Funktionen aktiviert sein. Alternativ oder ergänzend kann das Master-Modul zusätzlich zu den Bauteilen und/oder zusätzlich zu den dezentralen Funktionen eines Slave-Moduls weitere Bauteile und/oder zentrale Funktionen umfassen.

Alternativ oder ergänzend kann die Zentralfunktion (beispielsweise zumindest teilweise) außerhalb der Ladestation oder Ladesäule angeordnet sein. Beispielsweise kann die Zentralfunktion für eine oder mehrere Parkebenen, die eine Mehrzahl von Ladestationen oder Ladesäulen umfasst oder umfassen, zentral sein.

Ausführungsbeispiele des Ladesteuerungsmoduls können es ermöglichen, einen Parkplatz oder eine Parkanlage, beispielsweise eine Tiefgarage oder ein Parkhaus, mit einer Mehrzahl von Ladepunkten zum Steuern von Ladevorgängen von Traktionsenergiespeichern von Elektrofahrzeugen auszurüsten und/oder ein bestehendes Ladesystem zu erweitern.

Das Ladesteuerungsmodul kann sowohl in einem zentralen Ladesystem (beispielsweise in einem von der Systemsteuereinheit zentral gesteuerten Ladesystem) als auch in einem dezentral verteilten Ladesystem, beispielsweise in einer einzelnen Ladestation oder Ladesäule, verwendet werden. Die jeweils einem Ladepunkt zugeordneten Ladesteuerungsmodule können in einem Schaltschrank und/oder verteilt auf mehrere Untergruppen (beispielsweise beliebiger oder unterschiedlicher) Größe angeordnet werden. Beispielsweise können die Ladepunkte von zehn Doppelladern mit je zwei Parkplätzen, d.h. insgesamt zwanzig Ladepunkte, in einem Ladesystem zusammengefasst und von einer Zentralfunktion, insbesondere einer Systemsteuereinheit, des Ladesystems verwaltet werden.

Durch Ausführungsbeispiele des Ladesteuerungsmoduls ist eine Systemarchitektur eines Ladesystems umfassend N Ladepunkte ermöglicht, in der nur die dezentralen Funktionen N-fach verbaut sind, die an jedem der N Ladepunkte benötigt werden entsprechend der Mehrzahl von N Ladesteuermodulen, während die nur einmal benötigte Zentralfunktion (beispielsweise die zentralen Funktionen) nur einmal verbaut ist, beispielsweise in einem Ladesteuerungsmodul der Mehrzahl von N Ladesteuermodulen. Beispielsweise kann bei zwanzig (d.h., N=20) Ladepunkten, die in zehn Doppelladern angeordnet sind, je ein Master-Modul und ein Slave-Modul pro Doppellader verbaut sein. Das jeweilige Master-Modul kann nur die Anteile der Zentralfunktion umfassen, die lokal am Doppellader benötigt werden. Weitere Anteile der Zentralfunktion, beispielsweise ein Abrechnungssystem, können in einer zentralen Systemsteuereinheit implementiert sein.

Die zentrale Systemsteuereinheit kann (beispielsweise über das jeweilige Master-Modul) in Datenaustausch mit den Salve-Modulen stehen zur Ausführung oder Bereitstellung der Zentralfunktion.

Sind mehrere Ladepunkte in einer Ladestation (beispielsweise einer Ladesäule) untergebracht, so können diese durch eine (beispielsweise automatische) Verbindung untereinander verdrahtet werden. Beispielsweise kann die erste Datenschnittstelle des Slave-Moduls und/oder die zweite Datenschnittstelle das Master-Moduls dazu angeordnet sein, bei der Montage auf der Tragschiene in elektrischen Kontakt zu kommen mit der ersten Datenschnittstelle eine benachbarten Slave-Moduls und/oder der zweiten Datenschnittstelle eines benachbarten Master-Moduls. Beispielsweise können die zwei Datenschnittstellen am Gehäuse des jeweiligen Ladesteuerungsmoduls an in einer Längsrichtung der Tragschiene gegenüberliegenden Seiten angeordnet sein. Die montierten Ladesteuerungsmodule können (beispielsweise indem die Kontakte der beidseitigen Datenschnittstellen im Gehäuse durchgeleitet sind) einen Datenbus bilden. Alternativ oder ergänzend kann die erste Datenschnittstelle des Slave-Moduls und/oder die zweite Datenschnittstelle das Master-Moduls dazu angeordnet sein, bei der Montage auf der Tragschiene einen an der Tragschiene angeordneten Datenbus zu kontaktieren.

Die (beispielsweise physische und/oder logische) Datenverbindung zum Austausch der Daten innerhalb einer Ladestation kann über die erste oder ersten Datenschnittstellen des oder der Slave-Module und die zweite Datenschnittstelle des Master-Moduls aufgebaut werden, beispielsweise bei der oder in Reaktion auf die Montage. Alternativ oder ergänzend kann die Steuereinheit eines oder jedes Ladesteuerungsmoduls dazu ausgebildet sein, eine logische Verbindung zum Austausch der Daten zwischen der Mehrzahl von Ladesteuerungsmodulen in Reaktion auf den Aufbau der physikalischen Verbindung (beispielsweise die Verdrahtung) aufzubauen.

Alternativ oder ergänzend kann auch ein Netzwerk zum Austausch der Daten zwischen mehreren Ladestationen oder Ladesäulen und/oder ein Netzwerk zum Austausch der Daten zwischen einer Ladestation und einer Systemsteuereinheit, die jeweils dem gleichen Ladesystem (auch: "Verbund") zugeordnet sind, aufgebaut werden. Die Datenverbindung zwischen mehreren Ladestationen und/oder einer Systemsteuereinheit kann über das Master-Modul der jeweiligen Ladestation aufgebaut sein, beispielsweise über eine dritte Datenschnittstelle des jeweiligen Master-Moduls.

Das Gehäuse des Ladesteuerungsmoduls kann eine Ausnehmung zur Montage auf der Tragschiene umfassen.

Die Tragschiene kann eine Hutschiene sein oder umfassen. Die Tragschiene kann ein Quermaß (beispielsweise senkrecht zur Längsrichtung der Tragschiene oder eine Breite) und/oder die Ausnehmung des Gehäuses kann ein Quermaß (beispielsweise senkrecht zur Längsrichtung der Tragschiene oder eine Breite) von 35 mm aufweisen.

Die Tragschiene kann einen Datenbus umfassen. Die erste Datenschnittstelle (beispielsweise des Slave-Moduls) und/oder die zweite Datenschnittstelle (beispielsweise des Master-Moduls) können dazu ausgebildet sein, beim Montieren des Gehäuses auf der Tragschiene den Datenbus zum Austausch der Daten mit der Zentralfunktion zu kontaktieren.

Der Austausch der Daten kann auch als Datenverbindung bezeichnet werden.

Der Datenbus oder die Datenverbindung kann einen seriellen Bus und/oder einen Differential-Bus (fachsprachlich auch: Differenzial-Bus) beispielsweise zur symmetrische Signalübertragung umfassen. Der Differenzial-Bus kann ein Controller-Area-Network-Bus (CAN-Bus) sein.

Die Steuereinheit kann eine Stromsteuereinheit umfassen, die dazu ausgebildet ist, einen Ladestrom des Traktionsenergiespeichers beim Ladevorgang in Reaktion auf oder nach Maßgabe der ausgetauschten Daten von der Zentralfunktion zu steuern.

Die Stromsteuereinheit kann dazu ausgebildet sein, den Ladestrom nach einer Vorgabe der Zentralfunktion in den von der Zentralfunktion über die erste Datenschnittstelle erhaltenen Daten zu steuern. Die Vorgabe kann eine Freigabe des Ladestroms und/oder eine Kennung des zum Aufladen freigegebenen Elektrofahrzeugs umfassen.

Die Stromsteuereinheit kann dazu ausgebildet sein, einen Gleichstrom und/oder einen Wechselstrom als Ladestrom zu steuern.

Die Steuereinheit kann eine Verriegelungssteuerung umfassen. Die Verriegelungssteuerung kann dazu ausgebildet sein, einen Aktor einer Verriegelungsmechanik eines dem Ladepunkt zugeordneten Ladesteckers nach Maßgabe der Zentralfunktion zwischen einer verriegelten Stellung des Ladesteckers und einer entriegelten Stellung des Ladesteckers zu steuern.

Der Ladepunkt kann den Ladestecker und/oder eine Halterung des an einem Ladekabel angeordneten Ladesteckers umfassen. Alternativ oder ergänzend kann die verriegelte Stellung des Ladesteckers und/oder die entriegelte Stellung des Ladesteckers eine Stellung des Ladesteckers am Ladepunkt und/oder in der Halterung am Ladepunkt und/oder eine Stellung des an einem Ladekabel angeordneten Ladesteckers an einem Elektrofahrzeug umfassen.

Der Aktor der Verriegelungsmechanik kann auch als Verriegelungsaktuator bezeichnet werden.

Das Ladesteuerungsmodul umfasst erfindungsgemäß (beispielsweise zumindest teilweise) die Zentralfunktion für eine Mehrzahl von Ladesteuerungsmodulen. Die Mehrzahl von Ladesteuerungsmodulen umfasst das die (beispielsweise zumindest teilweise) Zentralfunktion umfassende Ladesteuerungsmodul und mindestens ein weiteres Ladesteuerungsmodule ohne Zentralfunktion. Das die (beispielsweise zumindest teilweise) Zentralfunktion umfassende Ladesteuerungsmodul umfasst eine am Gehäuse angeordnete zweite Datenschnittstelle. Die zweite Datenschnittschelle ist mit der ersten Datenschnittstelle des mindestens einen weiteren Ladesteuerungsmoduls verbunden oder verbindbar, beispielsweise direkt oder über einen Datenbus. Die zweite Datenschnittstelle ist dazu ausgebildet, die Daten des Ladevorgangs des mindestens einen weiteren Ladesteuerungsmoduls mit der Zentralfunktion auszutauschen.

Das Ladesteuerungsmodul umfassend die (beispielsweise zumindest teilweise) Zentralfunktion kann als Master-Modul bezeichnet werden. An einer Ladestation oder Ladesäule können ein Master-Modul und ein oder mehrere Slave-Module angeordnet sein, beispielsweise entsprechend der Mehrzahl von Ladesteuerungsmodulen. Das Master-Modul kann auch als Ladestationssteuerungsmodul oder Ladesäulensteuerungsmodul bezeichnet werden.

Die Tragschiene kann einen Datenbus umfassen. Die zweite Datenschnittstelle des die (beispielsweise zumindest teilweise) Zentralfunktion umfassenden Ladesteuerungsmoduls kann dazu ausgebildet sein, beim Montieren des Gehäuses auf der Tragschiene den Datenbus zum Austausch der Daten mit dem mindestens einen weiteren Ladesteuerungsmodul zu kontaktieren.

Das die (beispielsweise zumindest teilweise) Zentralfunktion umfassende Ladesteuerungsmodul kann ferner eine dritte Datenschnittstelle umfassen. Die dritte Datenschnittschelle kann zur Kommunikation mit einer Benutzerschnittstelle, einer Steuereinheit des Elektrofahrzeugs und/oder einer Systemsteuereinheit eines Ladesystems umfassend eine Vielzahl von Ladestationen ausgebildet sein. Jede Ladestation kann mindestens ein die (beispielsweise zumindest teilweise) Zentralfunktion umfassendes Ladesteuerungsmodul umfassen.

Die dritte Datenschnittstelle kann eine drahtlose Kommunikationsschnittstelle sein oder umfassen. Beispielsweise kann die dritte Datenschnittstelle eine Mobilfunkschnittstelle, eine Funkschnittstelle eines lokalen Funknetzes (beispielsweise eines sogenannten Wireless Local Area Network, WLAN, gemäß der Wi-Fi Alliance) und/oder eine Funkschnittstelle einer direkten Funkverbindung oder Punkt-zu-Punkt-Verbindung (beispielsweise eine Bluetooth-Schnittstelle gemäß der Bluetooth Special Interest Group) sein oder umfassen.

Die Benutzerschnittstelle kann ein mobiles Endgerät (beispielsweise eines Fahrers des Elektrofahrzeugs) umfassen. Die Kommunikation kann über das mobile Endgerät (beispielsweise ein Mobiltelefon, ein Smartphone und/oder einen Tablet-Computer) und/oder über eine Benutzerschnittstelle im Elektrofahrzeug erfolgen.

Die Steuereinheit des Elektrofahrzeugs kann ein Batteriemanagementsystem (BMS) des Traktionsenergiespeichers umfassen.

Die Steuereinheit des Master-Moduls kann mittels der dritten Datenschnittstelle dazu ausgebildet sein, eine Lastverteilung (auch: Lastmanagement) der Ladeströme (beispielsweise in Kommunikation mit der Systemsteuereinheit), einen Benutzerdaten-Abgleich (beispielsweise eine Benutzer-Berechtigung) und/oder eine Benutzerdaten-Abfrage (beispielsweise in Kommunikation mit der Benutzerschnittstelle oder dem RFID-Leser), eine Abfrage eines Systemstatus (beispielsweise in Kommunikation mit der Systemsteuereinheit), eine Abfrage einer Ladefreigabe (beispielsweise von einem Abrechnungssystem) und/oder eine Ausgabe an einer Anzeige (beispielsweise in Kommunikation mit der Benutzerschnittstelle) auszuführen.

Alternativ oder ergänzend kann die dritte Datenschnittstelle eine Anzeige (beispielsweise an der Ladestation) umfassen.

Hierin umfassen Aufzählungen der Form A, B und/oder C mindestens ein Element der Menge A, B und C. Aufzählungen der Form A, B und/oder C können als Aufzählungen der Form A und/oder B und/oder C gelesen werden.

Gemäß einem zweiten Aspekt wird eine Ladestation mit einer Mehrzahl von Ladepunkten jeweils für ein Elektrofahrzeug bereitgestellt. Die Ladestation umfasst eine Tragschiene. Ferner umfasst die Ladestation eine auf der Tragschiene montierte der Mehrzahl von Ladepunkten entsprechende Mehrzahl von Ladesteuerungsmodulen. Die Mehrzahl von Ladesteuerungsmodulen umfasst ein (beispielsweise als Master-Modul ausgebildetes) Ladesteuerungsmodul mit (beispielsweise zumindest teilweiser) Zentralfunktion und mindestens ein weiteres (beispielsweise als Slave-Modul ausgebildetes) Ladesteuerungsmodul.

Beispielsweise kann die Mehrzahl von Ladesteuerungsmodulen höchstens ein Ladesteuerungsmodul mit (beispielsweise zumindest teilweiser) Zentralfunktion umfassen. Alternativ oder ergänzend können alle weiteren Ladesteuerungsmodule der Mehrzahl von Ladesteuerungsmodulen ohne die Zentralfunktion ausgebildet sein.

Die Ladestation kann als Ladesäule ausgebildet sein.

Die Ladesteuerungsmodule können auf der Tragschiene in einer Reihe montiert oder montierbar sein. Beispielsweise kann das Ladesteuerungsmodul mit (beispielsweise zumindest teilweiser) Zentralfunktion als erstes in der Reihe auf der Tragschiene montiert sein. Die Reihenfolge kann sich auf eine Datenverbindung nach außen, beispielsweise zu einer zentralen Systemsteuereinheit eines Ladesystems umfassend eine Vielzahl von Ladestationen, beziehen.

Die Tragschiene kann einen Datenbus umfassen.

Die erste Datenschnittstelle eines oder jedes (beispielsweise als Slave-Modul ausgebildeten) Ladesteuerungsmoduls kann mit dem Datenbus der Tragschiene verbunden sein. Alternativ oder ergänzend kann die erste Datenschnittstelle eines (beispielsweise als Slave-Modul ausgebildeten) Ladesteuerungsmoduls direkt mit der ersten Datenschnittstelle des (beispielsweise als Slave-Modul ausgebildeten) benachbarten Ladesteuerungsmoduls verbunden sein. Die direkte Verbindung kann beispielsweise über aneinandergrenzende Seiten der Gehäuse benachbarter Ladesteuerungsmodule bereitgestellt sein.

Die erste Datenschnittstelle eines (beispielsweise eines als Master-Modul ausgebildeten) Ladesteuerungsmoduls, welches die (beispielsweise zumindest teilweise) Zentralfunktion der Ladestation oder Ladesäule umfasst, kann innerhalb des Gehäuses (beispielsweise als interne oder virtuelle Schnittstelle zwischen den Slave-Funktionen des Master-Moduls und der, beispielsweise zumindest teilweisen, Zentralfunktion) angeordnet sein.

Die zweite Datenschnittstelle eines die (beispielsweise zumindest teilweise) Zentralfunktion umfassenden (beispielsweise eines als Master-Modul ausgebildeten) Ladesteuerungsmoduls kann mit dem Datenbus der Tragschiene verbunden sein. Alternativ oder ergänzend kann die zweite Datenschnittstelle des die beispielsweise zumindest teilweise) Zentralfunktion umfassenden (beispielsweise eines als Master-Modul ausgebildeten) Ladesteuerungsmoduls direkt mit der ersten Datenschnittstelle eines (beispielsweise als Slave-Modul ausgebildeten) benachbarten Ladesteuerungsmoduls verbunden sein. Die direkte Verbindung kann beispielsweise über aneinandergrenzende Seiten der Gehäuse benachbarter Ladesteuerungsmodule bereitgestellt sein.

Die Tragschiene kann als Hutschiene ausgebildet sein.

Ein Quermaß der Tragschiene und/oder Hutschiene kann 35 mm umfassen.

Die Mehrzahl von Ladesteuerungsmodulen kann in Reihe auf der Hutschiene montiert sein. Beispielsweise kann das Master-Modul als erstes in der Reihe der Module auf der Hutschiene montiert sein gefolgt von einem oder mehreren Slave-Modulen. Eine Reihenfolge der Ladesteuerungsmodule kann sich auf eine Datenverbindung zu einer zentralen Systemsteuereinheit eines Ladesystems umfassend eine Vielzahl von Ladestationen beziehen.

Die Tragschiene kann einen Datenbus zur Austausch der Daten zwischen der zweiten Datenschnittstelle des Ladesteuerungsmoduls mit beispielsweise zumindest teilweiser) Zentralfunktion und der mindestens einen ersten Datenschnittstelle des mindestens einen weiteren Ladesteuerungsmoduls ohne Zentralfunktion umfassen.

Der Datenbus kann einen in einer Hutschiene integrierten CAN-Bus umfassen.

Die Ladestation kann ferner eine Grundplatte umfassen. Die Tragschiene kann auf der Grundplatte befestigt sein.

Die Grundplatte kann in der Ladestation oder Ladesäule beweglich (beispielsweise längsbeweglich und/oder beweglich entlang einer Richtung parallel zur Grundplatte) angeordnet sein. Beispielsweise kann die Grundplatte für Wartungszwecke und/oder Montagezwecke aus einer Betriebsstellung (auch: Arbeitsstellung) in der Ladestation oder Ladesäule (beispielsweise längsbeweglich und/oder beweglich entlang einer Richtung parallel zur Grundplatte) herausnehmbar sein.

Gemäß einem dritten Aspekt ist ein Ladesystem bereitgestellt. Das Ladesystem umfasst eine Systemsteuereinheit. Das Ladesystem umfasst ferner eine Vielzahl von Ladestationen. Die Vielzahl der Ladestationen ist (beispielsweise jeweils) dazu ausgebildet, in Datenverbindung mit der Systemsteuereinheit zu stehen.

Die Vielzahl von Ladestationen kann auf einer oder mehreren Ebenen einer Parkanlage, beispielsweise eines Parkhauses, angeordnet sein.

Die Datenverbindung zwischen der Vielzahl von Ladestationen und der Systemsteuereinheit kann eine Ethernet-Verbindung und/oder eine drahtlose Verbindung (beispielsweise über ein WLAN-System der Parkanlage) umfassen.

Die Systemsteuereinheit kann über die Datenverbindung Kennungen der Ladesteuerungsmodule der Vielzahl von Ladestationen erfassen.

Eine Kennung eines Ladesteuerungsmoduls kann eine Geräteadresse (auch: "Hardware-Adresse", beispielsweise eine "Media-Access-Control-Adresse", kurz "MAC-Adresse") eines Ladesteuerungsmoduls umfassen. Alternativ oder ergänzend kann eine Kennung einer Ladestation die Geräteadresse des Master-Moduls der Ladestation umfassen.

Vorzugsweise kann die Systemsteuereinheit (beispielsweise anhand der jeweiligen Kennung des Ladesteuerungsmoduls) über die Datenverbindung eine Anordnung der Ladesteuerungsmodule und/oder eine Zuordnung der Ladesteuerungsmodule zu je einem Ladepunkt in jeder der Vielzahl der Ladestationen erfassen.

Die Anordnung der Ladesteuerungsmodule kann auch als Topologie bezeichnet werden. Die Systemsteuereinheit kann eine Änderung der Topologie (beispielsweise automatisch, insbesondere ohne manuelle Eingabe durch einen Systemadministrator) erfassen, beispielsweise beim Austausch eines Ladesteuerungsmoduls. Beispielsweise kann mittels eines in einer Tragschiene einer Ladestation integrierten Datenbusses ein Austausch eines Ladesteuerungsmoduls anhand einer Überwachung der zur ersten Datenschnittstelle (für ein Slave-Modul) und/oder zur zweiten Datenschnittstelle (für das Master-Modul) komplementären Datenschnittstelle des Datenbusses ein Austausch eines Ladesteuerungsmoduls anhand einer zeitweisen Unterbrechung einer Datenverbindung erkannt werden. Eine zeitweise Unterbrechung der Datenverbindung an einer Datenschnittstelle des Datenbusses kann zusammen mit der Kennung der Ladestation (beispielsweise mittels der Geräteadresse des Master-Moduls der Ladestation) an die Systemsteuereinheit kommuniziert werden.

Die Systemsteuereinheit kann dazu ausgebildet sein, aufgrund einer erkannten Topologie oder in Reaktion auf eine Änderung der Topologie alle Ladesteuerungsmodule oder ein ausgetauschtes (beispielsweise erstmalig montiertes) Ladesteuerungsmodul zu konfigurieren. Das Konfigurieren kann ein Senden einer Konfigurationsnachricht von der Systemsteuereinheit an das jeweilige Ladesteuerungsmodul (beispielsweise über das Master-Modul an ein Slave-Modul) umfassen. Alternativ oder ergänzend kann das Konfigurieren eines Ladesteuerungsmodul das Konfigurieren der Steuereinheit des jeweiligen Ladesteuerungsmoduls umfassen, beispielsweise das Konfigurieren der Steuereinheit des jeweiligen Ladesteuerungsmoduls zum Ausführen der dezentralen Funktionen. Die Konfigurationsnachricht kann Parameter der dezentralen Funktionen umfassen. Eine Notwendigkeit einer manuellen Eingabe durch einen Systemadministrator der Konfiguration am jeweiligen Ladesteuerungsmodul kann entfallen.

Nachfolgend wird die Erfindung unter Bezugnahme auf die anliegenden Zeichnungen anhand bevorzugter Ausführungsformen näher erläutert.

Es zeigen:
- Fig. 1: eine schematische Darstellung eines Ladesteuerungsmoduls (beispielsweise eines "Slave-Moduls") gemäß einer ersten Ausführungsform in einer ersten Seitenansicht;
- Fig. 2: eine schematische Darstellung eines Ladesteuerungsmoduls gemäß der ersten Ausführungsform (beispielsweise eines "Slave-Moduls") der Fig. 1 oder einer zweiten Ausführungsform (beispielsweise eines "Master-Moduls") der Fig. 3 in einer zu den in Fig. 1 bzw. Fig. 3 um eine vertikale Achse um 90 Grad gedrehten zweiten Seitenansicht;
- Fig. 3: eine schematische Darstellung eines Ladesteuerungsmoduls (beispielsweise eines "Master-Moduls") gemäß einer zweiten Ausführungsform in einer ersten Seitenansicht;
- Fig. 4: eine schematische Darstellung eines Ausführungsbeispiels eines Ladesystems umfassend eine Mehrzahl von Ladestationen, wobei jede Ladestation ein Ladesteuerungsmodul gemäß der zweiten Ausführungsform (beispielsweise ein "Master-Modul") der Fig. 3 und ein oder mehrere Ladesteuerungsmodule gemäß der ersten Ausführungsform (beispielsweise ein oder mehrere "Slave-Module") der Fig. 1 umfasst; und
- Fig. 5: ein schematische Darstellung einer Weiterbildung des Ladesteuerungsmoduls (beispielsweise des "Slave-Moduls") gemäß der ersten Ausführungsform in einer Frontansicht.

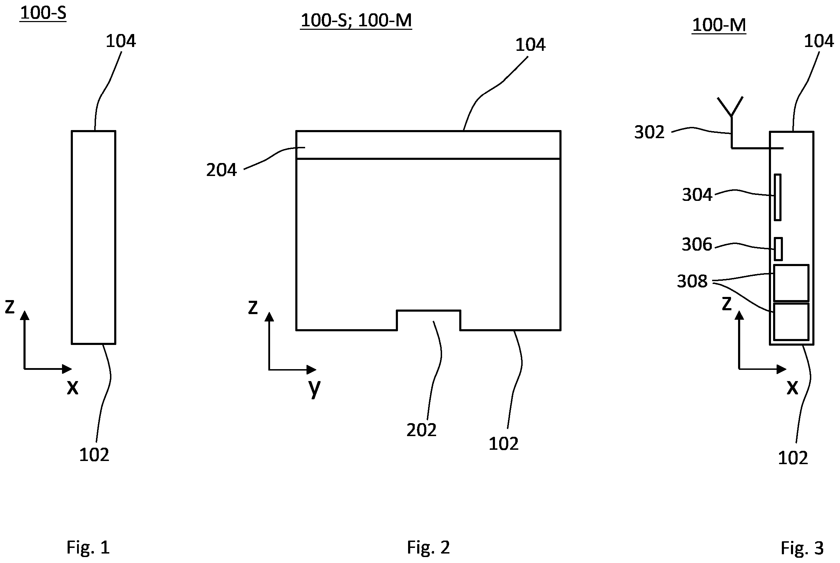

Fig. 1 zeigt ein Ladesteuerungsmodul gemäß einer ersten Ausführungsform der Erfindung in einer ersten Seitenansicht. Das Ladesteuerungsmodul gemäß der ersten Ausführungsform ist allgemein mit Bezugszeichen 100-S bezeichnet.

Das Ladesteuerungsmodul 100-S umfasst ein Gehäuse. Das Ladesteuerungsmodul 100-S ist mit einer ersten Gehäuseseite 102 an einer Tragschiene montierbar, beispielsweise mittels einer (nicht gezeigten) Rastung oder Verriegelungsmechanik. Eine zweite Gehäuseseite 104 ist von der ersten Gehäuseseite 102 und/oder der Rastung für die Tragschiene abgewandt. Die erste Gehäuseseite 102 und die zweite Gehäuseseite 104 erstrecken sich jeweils in einer xy-Ebene (wobei die y-Achse in Fig. 1 nicht gezeigt ist). Die erste Gehäuseseite 102 und die zweite Gehäuseseite 104 sind entlang einer z-Richtung voneinander beabstandet.

Eine Längsrichtung der Tragschiene (nicht gezeigt) kann entlang der x-Achse aufweisen. Ein Quermaß der Tragschiene kann entlang einer zur x-Achse und zur z-Achse senkrechten y-Achse (nicht gezeigt) aufweisen.

Die in Fig. 1 gezeigte Ausführungsform eines Ladesteuerungsmoduls 100-S umfasst dezentrale Funktionen. Das Ladesteuerungsmodul 100-S kann auch als "Slave-Modul" bezeichnet werden.

Fig. 2 zeigt das Ladesteuerungsmodul 100-S in einer zweiten Seitenansicht, die bezüglich der ersten Seitenansicht in Fig. 1 um 90 Grad um eine vertikale Achse (z-Achse) gedreht ist. An der ersten Gehäuseseite 102 befindet sich eine Ausnehmung 202 mit einer Rastung oder Verriegelungsmechanik zur Montage an einer Tragschiene. Die Ausnehmung 202 (beispielsweise die Rastung oder Verriegelungsmechanik) kann eine erste Datenschnittstelle 202 umfassen. Beispielsweise kann die erste Datenschnittstelle 202 einen Busanschluss und/oder eine Leitenplatten-Direktsteckung (kurz: LP-Direktsteckung) umfassen.

An der zweiten Gehäuseseite 104 befindet sich in der Ausführungsform der Fig. 2 ein Anschlussbereich 204 für dezentrale Funktionen, die auch als Peripherie-Komponenten bezeichnet werden können. Die dezentralen Funktionen können eine digitale Ein-/Ausgabeschnittstelle (auch fachsprachlich: "Input/Output", kurz: I/O), eine Differenzstrommesseinrichtung (auch: RCM-Modul), eine Steckdose oder Steckverbindung (englisch: "socket outlet"), eine Energiemesseinrichtung und/oder einen RFID Leser umfassen.

Fig. 3 zeigt ein Ladesteuerungsmodul gemäß einer zweiten Ausführungsform der Erfindung. Das Ladesteuerungsmodul gemäß der zweiten Ausführungsform ist allgemein mit Bezugszeichen 100-M bezeichnet. Das Ladesteuerungsmodul 100-M hat eine erste Gebäudeseite 102 zur Montage an einer Tragschiene (nicht gezeigt, beispielsweise mit einer Längsausdehnung der Tragschiene entlang der x-Achse). Das Ladesteuerungsmodul 100-M weist ferner eine zweite Gebäudeseite 104 auf, die von der ersten Gebäudeseite 102 abgewandt und entlang der z-Achse beabstandet ist.

Das Ladesteuerungsmodul 100-M umfasst eine dritte Datenschnittstelle, die verschiedene Ausführungsformen haben kann. In Fig. 3 ist beispielhaft eine Antenne 302 gezeigt, über die eine Mobilfunkverbindung (beispielsweise über ein Mobilfunknetz gemäß einem der Standards 3G, 4G oder 5G des 3rd Generation Partnership Project, 3GPP, über ein lokales WLAN und/oder über Bluetooth) mit einem Benutzer, einer Ladesystemsteuerung (auch: Systemsteuereinheit) und/oder einer Cloud (nicht gezeigt) hergestellt werden kann.

Das Ladesteuerungsmodul 100-M kann ferner optional einen oder mehrere der bei Bezugszeichen 304, 306 gezeigten Anschlüsse für ein serielles Bussystem (beispielsweise einen "Universal Serial Bus", kurz: USB), eine Karte mit einem Teilnehmer-Identitätsmodul (englisch: "Subscriber Identitity Module", kurz: SIM) und/oder eine digitale Speicherkarte (englisch: "Secure Digital Memory Card" oder kurz "SD Card") umfassen.

Weiterhin optional kann das Ladesteuerungsmodul 100-M mindestens einen Anschluss 308 für eine drahtgebundene Datenverbindung umfassen. Im Ausführungsbeispiel der Fig. 3 umfasst das Ladesteuerungsmodul 100-M zwei Ethernet-Schnittstellen, die als Steckdosen vom Typ RJ 45 ausgebildet sein können.

Die Antenne 302, die Anschlüsse 304, 306 und/oder die drahtgebundenen Datenschnittstellen 308 können als dritte Datenschnittstelle bezeichnet werden.

Das Ladesteuerungsmodul 100-M umfasst sowohl dezentrale als auch zentrale Funktionen. Das Ladesteuerungsmodul 100-M kann auch als "Master-Modul" bezeichnet werden.

Eine um 90 Grad entlang der z-Achse gedrehte Seitenansicht des (beispielsweise als Master-Modul ausgebildeten) Ladesteuerungsmoduls 100-M kann einer Seitenansicht des (beispielsweise als Slave-Modul ausgebildeten) Ladesteuerungsmoduls 100-S in Fig. 2 entsprechen. Bei dem Ladesteuerungsmodul 100-M kann die Ausnehmung 202 und/oder Rastung 2020 eine zweite Datenschnittstelle 202 umfassen, die zum Datenaustausch mit den ersten Datenschnittstellen 202 der Slave-Module 100-S ausgebildet ist. Die erste Datenschnittstelle des Master-Moduls 100-M kann als virtuelle Schnittstelle (nicht gezeigt) zwischen dezentralen Funktionen und zentralen Funktionen innerhalb des Gehäuses des Ladesteuerungsmoduls 100-M angeordnet sein.

Das Gehäuse kann ein bestehendes Gehäuse sein, das dazu ausgebildet ist, beliebige elektrische Baugruppen, insbesondere Ladesteuerungsmodule 100-S oder 100-M einer oder jeder hierin offenbarten Ausführungsform, aufzunehmen oder zu häusen.

Die Tragschiene kann einen Bus-Adapter (beispielsweise Hutschienen-Bus-Adapter) als Datenbus umfassen. Über den Datenbus kann eine erste Datenverbindung zwischen Ladesteuerungsmodulen 100-S und 100-M und/oder (beispielsweise mittelbar über das Master-Modul 100-M) eine zweite Datenverbindung zwischen Ladestationen und/oder (beispielsweise mittelbar über das Master-Modul 100-M) eine dritte Datenverbindung zwischen einem Ladesteuerungsmodul 100-S oder 100-M und einer Systemsteuereinheit bestehen. Dadurch kann im Zuge der Montage eine (beispielsweise automatische) Datenverbindung aufgebaut werden.

Der Hutschienen-Bus-Adapter kann an eine Gehäuse-Serie angepasst sein. Die Gehäuse (beispielsweise derselben Gehäuse-Serie für eine Ladestation oder Ladesäule und/oder für ein Ladesystem) können gemeinsam, beispielsweise in einer Reihe, auf einer 35 mm breiten Tragschiene gemeinsam mit den Bus-Adaptern (auch: Tragschienen-Busverbinder) montiert sein. Die Tragschiene kann wiederum auf einer Grundplatte eines Schaltschranks in einer Ladestation oder Ladesäule montiert sein.

Jedes Ladesteuerungsmodul 100-S, 100-M kann einen Ladepunkt steuern und/oder einem Ladepunkt zugeordnet sein. An dem Ladepunkt kann eine oder können alle notwendigen Zusatzkomponenten zum Laden mit Wechselstrom (englisch: "Alternating Current", kurz: AC) und/oder Gleichstrom (englisch: "Direct Current", kurz: oder DC) vorhanden und/oder angeschlossen sein, beispielsweise das RCM-Modul, der Verriegelungsaktuator, das Ladeschütz, der RFID-Leser und/oder die Energiemesseinrichtung.

Das Ladesystem oder die Ladestation umfasst Ladesteuerungsmodule (beispielsweise Slave-Module 100-S), die nur die Ladepunkt-spezifischen (d.h. dezentralen) Funktionen (beispielsweise in der jeweiligen Steuereinheit) implementieren, die einem Ladepunkt zugeordnet sind, und mindestens ein Ladesteuerungsmodul (beispielsweise Master-Module 100-M), das neben den dezentralen Funktionen auch Funktionen aufweist, welche der Ladestation oder Ladesäule als Zentralsystem (auch: "Gesamtsystem") zugeordnet sind, vorzugsweise zur Datenverbindung mit der Systemsteuereinheit (beispielsweise einer Parkanlage umfassend eine Vielzahl von Ladestationen und/oder zur Datenverbindung mit einem oder mehreren Abrechnungssystemen).

Jeder Ladepunkt kann sowohl autark als auch im Systemverbund (beispielsweise innerhalb einer Ladestation oder Ladesäule oder innerhalb eines Ladesystems umfassend eine Vielzahl von Ladestationen) funktionsfähig sein.

Die Ladepunkte können innerhalb einer Ladestation oder einer Ladesäule über einen Differenzial-Bus, insbesondere einen CAN-Bus, beispielsweise über die Bus-Adapter miteinander verbunden sein im Sinne der ersten Datenverbindung zwischen den ersten und zweiten Datenschnittstellen.

Ladepunkte verschiedener Ladestationen oder Ladesäulen, insbesondere Ladepunkte in einer Vielzahl von Ladestationen innerhalb einer Parkanlage, können über die ersten, zweiten und/oder dritten Datenschnittstellen miteinander verbunden sein. Fig. 3 zeigt eine Antenne 302, eine Kartenaufnahme 304, einen USB-Anschluss 306, Ethernet-Schnittstellen 308 jeweils als ein mögliches Ausführungsbeispiel der dritten Datenschnittstelle zum Aufbau der zweiten oder dritten Datenverbindung.

Es können so beispielsweise mehrere Parkhausebenen oder Ladestationen mit zwei, drei und/oder vier Ladepunkten (auch: "Zweier-Inseln", "Dreier-Inseln" und/oder "Vierer-Inseln") zu einem Ladesystem (auch: Gesamtsystem) verbunden und gemeinsam gesteuert und/oder verwaltet werden.

Eine Steuereinheit eines die (beispielsweise zumindest teilweise) Zentralfunktion umfassenden Ladesteuerungsmoduls (beispielsweise eines Master-Moduls) 100-M und/oder eine Systemsteuereinheit (auch: "Ladekontroller im System") eines Ladesystems kann eine Datenschnittstelle nach außen (beispielsweise relativ zu einer Ladestation oder Ladesäule) bilden. Die Steuereinheit des Master-Moduls 100-M und/oder Systemsteuereinheit kann alle Informationen und/oder Funktionen bezüglich Ladevorgängen an der Ladestation und/oder im Gesamtsystem verteilen, regeln und/oder steuern. Die Informationen und/oder Funktionen können beispielsweise ein Lastmanagement, eine Benutzer-Autorisierung, eine Abrechnungsdaten-Weitergabe und/oder Abrechnungsdaten-Anzeige und/oder Systemstatus-Darstellungen umfassen. Ein Systemstatus kann sich auf einen oder jeden Ladepunkt einer Ladestation oder Ladesäule und/oder auf eine Vielzahl von Ladestationen und/oder Ladesäulen, beispielsweise in einer Parkanlage, beziehen.

Das die (beispielsweise zumindest teilweise) Zentralfunktion umfassende Ladesteuerungsmodul ("Master-Modul") ist frei wählbar. Beispielsweise kann das Master-Modul als erstes Ladesteuerungsmodul auf der Hutschiene angeordnet sein gefolgt von weiteren Ladesteuerungsmodulen ("Slave-Modulen") ohne Zentralfunktion.

Funktionen, die je nach Ausführung einem, zwei oder mehreren Ladepunkten zugeordnet werden können (beispielsweise kann ein RFID-Leser zwei Ladepunkten zugeordnet sein), können über eine Konfiguration einer bestimmten Gruppe von Ladepunkten im System zugeordnet werden. Die Konfiguration kann beispielsweise von einer Systemsteuereinheit eines Ladesystems ausgeführt werden. Insbesondere kann die Konfiguration ohne manuelle Eingabe (beispielsweise eines Systemadministrators) erfolgen.

Das die (beispielsweise zumindest teilweise) Zentralfunktion umfassende Ladesteuerungsmodul (auch: Master-Modul) kann in der Bauart identisch zu den weiteren Ladesteuerungsmodulen (auch: Slave-Modulen) ohne Zentralfunktion sein. Alternativ oder ergänzend können das Master-Modul und das Slave-Modul sich unterscheiden dahingehend, dass das Slave-Modul nur die (beispielsweise dezentralen) Funktionen bereitstellt, die zur Realisierung des zugeordneten Ladepunkts benötigt werden.

Die erfindungsgemäßen Ladesteuerungsmodule (beispielsweise Master-Modul 100-M und Slave-Modul 100-S) können (beispielsweise innerhalb einer Ladestation oder Ladesäule) Ladepunkten entsprechend aneinander-reihbar sein. Alternativ oder ergänzend ermöglicht das erfindungsgemäße Ladesystem eine Systembildung ohne aktive (beispielsweise manuelle) Konfigurierung durch einen Benutzer und/oder Systemadministrator. Ausführungsbeispiele können eine automatische Konfiguration des Ladesystems ermöglichen. Eine Verwendung gleicher Hardwarekomponenten, beispielsweise für Slave-Module 100-S und Master-Module 100-M, ermöglicht einen einfachen und kostengünstigen modularen Aufbau und/oder Ausbau sowie eine Wartung (beispielsweise einen Austausch eines einzelnen Ladesteuerungsmoduls im Fehlerfall und/oder nach einer festgelegten Betriebsdauer und/oder Lebensdauer des Ladesteuerungsmoduls).

Die Ladestationen und/oder die Ladesteuerungsmodule eines Ladesystems können über einen lokalen (beispielsweise in der Tragschiene integrierten) Rückwandbus als erste Datenverbindung und/oder über Ethernet als die zweite Datenverbindung automatisch zu einem Netzwerk verknüpft sein.

Die Topologie (beispielsweise umfassend eine Zuordnung von Ladesteuerungsmodulen zu Ladepunkten) des kombinierten Ladesystems und/oder Netzwerks kann automatisch (beispielsweise ohne manuelle Eingabe eines Systemadministrators) erkannt werden. Alternativ oder ergänzend ist ein Austausch von Ladesteuerungsmodulen ohne (beispielsweise manuelle) Neukonfiguration möglich. Beispielsweise kann ein Master-Modul 100-M einer Ladestation und/oder die Systemsteuereinheit eines eine Vielzahl von Ladestationen umfassenden Ladesystems die Konfiguration eines oder jedes Slave-Moduls 100-S speichern (beispielsweise jedes Slave-Moduls 100-S, das der Ladestation und/oder der Systemsteuereinheit zugeordnet ist).

Ausführungsbeispiele der Erfindung ermöglichen eine Zuordnung von zentralen Funktionen (kurz: Zentralfunktion) und dezentralen Funktionen, die sowohl einer Ladestation mit N Ladepunkten als auch einem Ladepunkt zugeordnet werden können (auch als 1:1-Zuordnung, 1:2-Zuordnung, ..., 1:N-Zuordnung bezeichnet, wobei N eine natürliche Zahl größer 1 ist) durch Konfiguration. Hierbei kann die Konfiguration das Empfangen von Konfigurationsparametern (beispielsweise gesendet von der Zentralfunktion) am Salve-Modul 100-S umfassen.

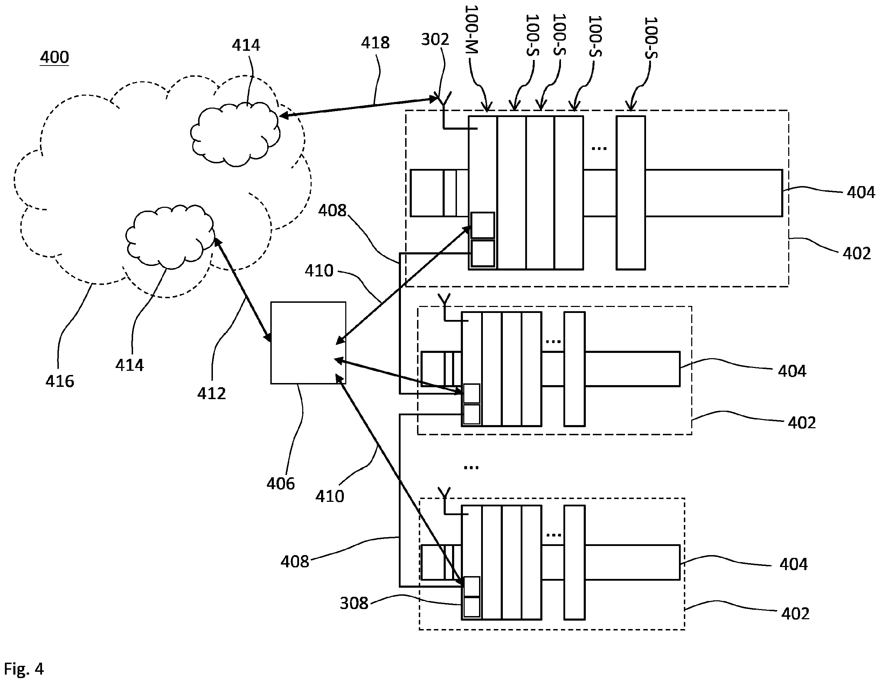

Fig. 4 zeigt eine Ausführungsform eines allgemein mit Bezugszeichen 400 bezeichneten Ladesystems.

Das beispielhafte Ladesystem 400 in Fig. 4 umfasst eine Vielzahl (beispielsweise drei) Ladestationen 402, die auch als Ladesäulen 402 ausgebildet sein können. Jede Ladestation 402 oder Ladesäule 402 umfasst ein Master-Modul 100-M und ein oder mehrere Slave-Module 100-S, die in einer Reihe auf einer Tragschiene 404, beispielsweise einer Hutschiene, montiert sind. Das Master-Modul 100-M und die Slave-Module 100-S sind über eine in der Tragschiene 404 integrierte Datenverbindung miteinander verbunden. Die Datenverbindung kann eine erste Datenschnittstelle der Slave-Module 100-S und eine zweite Datenschnittstelle des Master-Moduls 100-M umfassen.

Ferner sind die Master-Module 100-M der Ladestationen 402 in dem Ladesystem 400 der Fig. 4 mit einer Systemsteuereinheit 406 verbunden über mindestens eine dritte Datenschnittstelle, beispielsweise gemäß einem der Merkmale 302, 304, 306 und/oder 308.

Die Datenverbindung zwischen den Master-Modulen 100-M und der Systemsteuereinheit 406 kann eine (insbesondere direkte) verdrahtete Verbindung 410, beispielsweise ein Ethernet-Verbindung jedes Master-Moduls 100-M mit der Systemsteuereinheit 406, umfassen. Alternativ oder ergänzend kann eine verdrahtete Verbindung (beispielsweise indirekte) Ethernet-Verbindungen 408 der Master-Module 100-M einer Vielzahl von Ladestationen 402 untereinander umfassen sowie eine (insbesondere direkte) Ethernet-Verbindung 410 eines Master-Moduls 100-M zu der Systemsteuereinheit 406.

Die dritte Datenschnittstelle kann mittels einer Antenne 302 mit Radiomodem; einer SIM-Karten- oder SD-Kartenaufnahme 304; einem USB-Anschluss 306 und/oder einer Ethernet-Schnittstelle 308 realisiert sein.

Alternativ oder ergänzend kann die zweite Datenverbindung 408 zwischen den der Master-Modulen 100-M und/oder die dritte Datenverbindung 410 der Master-Module 100-M mit der Systemsteuereinheit 406 drahtlos sein. In der in Fig. 4 gezeigten Ausführungsform des Ladesystems 400 kann ein Master-Modul 100-M über eine drahtlose Datenverbindung 418 mit einem als "Cloud" bezeichenbaren Rechnernetzwerk 416 (beispielsweise das Internet), die eine Mehrzahl von Teil-Netzen 414 umfassen kann, zum Datenaustausch verbunden sein. Die Systemsteuereinheit 406 kann ebenfalls über eine drahtlose Verbindung 412 mit der Cloud 416 in Datenverbindung stehen.

Gemäß einem ersten Ausführungsbeispiel, das mit jeder hierin offenbarten Ausführungsform und/oder jedem hierin offenbarten Ausführungsbeispiel kombinierbar ist, umfasst das Ladesteuerungsmodul 100 (beispielsweise dessen Steuereinheit) einen Zugang (beispielsweise mittels der dritten Datenschnittstelle) zu öffentlich zugänglicher Software oder Quellcodes (englisch: "Open Source Support"), beispielsweise einen Zugang zu einer digitale Vertriebsplattform für Anwendungssoftware (englisch: "Application Store" oder kurz "AppStore") und/oder zu einem freien Kommunikationsstandard für Ladepunkte (englisch: "Open Charge Point Protocol" oder kurz: OCPP).

Das Ladesteuerungsmodul 100 gemäß dem ersten Ausführungsbeispiel ist mit Cloud-Diensten verbunden. Die Cloud-Dienste können einem Betreiber und/oder einem Dienstleister zugeordnet sein und Sicherungssoftware und/oder eine lokale (auch: "patch") Steuerung umfassen. Das Ladesteuerungsmodul gemäß dem ersten Ausführungsbeispiel umfasst ferner eine lokale Laststeuerung und ein Energiemanagement. Das Ladesteuerungsmodul umfasst eine Ausstattung zur Verwendung in einem intelligenten Stromnetz (englisch: "Smart Grid") gemäß IEC 61850, Smart Home mittels EEBUS, Fahrzeug-zu-Stromnetz (englisch: "vehicle to grid" oder kurz: V2G) gemäß ISO 15118, Mobilfunkverbindung gemäß 4G und/oder 5G, Ethernet-Verbindung (beispielsweise in einem Weitverkehrsnetz, englisch "Wide Area Network" oder kurz "WAN", und/oder einem lokalen Netzwerk, LAN) und/oder eine Verbindung gemäß USB "On the go" (USB-OTG).

Gemäß einem zweiten Ausführungsbeispiel, das mit jeder hierin offenbarten Ausführungsform und/oder jedem hierin offenbarten Ausführungsbeispiel kombinierbar ist, ist ein Ladesteuerungsmodul zur Wechselstromladung gemäß Standard 61851-1 ausgebildet. Das Ladesteuerungsmodul gemäß zweite Ausführungsbeispiel umfasst eine V2G-Verbindung gemäß ISO 15118, eine Verriegelungskontrolle und eine automatische Entriegelung bei Leistungsverlust (englisch: "power loss"). Das Ladesteuerungsmodul gemäß dem zweiten Ausführungsbeispiel umfasst ferner einen Schaltschütz (beispielsweise für 230 V), ein Gleichstrom-RCM-Modul (beispielsweise für 6 mA), einen RFID Leser, eine Energiemesseinrichtung und digitale Mehrzweck-Ein-/Ausgabeschnittstellen (englisch: "multiple purpose digital I/Os").

Gemäß einem dritten Ausführungsbeispiel, das mit jeder hierin offenbarten Ausführungsform und/oder jedem hierin offenbarten Ausführungsbeispiel kombinierbar ist, umfasst eine Ladestation eine öffentliche Wechselstromladestation (englisch: "public AC charging pole"), die auch als Lichtsäule (englisch: "lightpole") bezeichnet werden kann. Das Ladesteuerungsmodul des dritten Ausführungsbeispiels wird durch eine Gleichstromquelle (beispielsweise mit einer Gleichstromspannung in Höhe von 12V) gespeist. Das Ladesteuerungsmodul des dritten Ausführungsbeispiels umfasst und/oder steht in Signalverbindung mit einem RFID Leser, einer Laststromleitung (englisch: "Mains", umfassend einen Wechselstrom), einem Schaltschütz (beispielsweise für 230 V), einem RMC-Modul (beispielsweise ausgelegt für 6 mA) und einem Stromzähler (englisch: "Metering").

Gemäß einem vierten Ausführungsbeispiel, das mit jeder hierin offenbarten Ausführungsform und/oder jedem hierin offenbarten Ausführungsbeispiel kombinierbar ist, umfasst ein Ladesteuerungsmodul zur Gleichstromschnellladung (englisch: "DC Fast Charging") ein kombiniertes Ladesystem (englisch: "Combined Charging System", kurz CCS), optional zur Hochstromladung (englisch: "High Power Charging", kurz "HPC").

Alternativ oder ergänzend kann der Stecker (auch: Steckverbinder) und/oder können die dezentralen Funktionen (beispielsweise bezüglich der Datenkommunikation mit dem Elektrofahrzeug) gemäß der japanischen Norm CHAdeMO und/oder der chinesischen Norm GB-T ausgebildet sein. Der Steckverbinder gemäß CCS, CCS-HPC, CHAdeMO und/oder GB-T kann ferner umfassen einen CAN-Bus zur Kommunikation zwischen der Steuereinheit des Ladesteuerungsmoduls 100 und der Steuereinheit des Elektrofahrzeugs.

Die dezentralen Funktionen können ein Steuern, Regeln und/oder Auslesen einer Ladestations-Peripherie umfassen. Die Ladestations-Peripherie kann beispielsweise eine Leistungselektronik, Isolierungsüberwachung und/oder einen Stromzähler umfassen. Das Ladesteuerungsmodul des vierten Ausführungsbeispiels kann ferner, beispielsweise zum Steuern, Regeln und/oder Auslesen gemäß den dezentralen Funktionen, eine oder mehrere serielle Datenschnittstellen (beispielsweise gemäß einer der Normen RS232, RS485 und/oder CAN), eine drahtgebundene Datenschnittstelle (beispielsweise eine Ethernet-Schnittstelle gemäß einem Netzwerkprotokoll "Transmission Control Protocol / Internet Protocol", kurz TCP/IP, und/oder gemäß einem Steckverbinder vom Typ RJ 45) und/oder ein oder mehrere digitale Ein-/Ausgabeschnittstellen (I/Os) umfassen.

Gemäß einem fünften Ausführungsbeispiel, das mit jeder hierin offenbarten Ausführungsform und/oder jedem hierin offenbarten Ausführungsbeispiel kombinierbar ist, sind die Ladesteuerungsmodule Teil eines modularen Baukastensystem zur Einrichtung eines Ladesystems und/oder einer Ladeinfrastruktur für Traktionsenergiespeicher für Elektrofahrzeuge. Das modulare Baukastensystem ermöglicht eine Vielzahl von Anwendungsfällen, insbesondere für ein eigenständiges System (beispielsweise einen einzelner Ladepunkt) und/oder verbundene Systeme (die auch allgemein als "Master-Slave"-Systeme bezeichnet werden können) mit einem oder mehreren Ladepunkten (beispielsweise 1 bis N Ladepunkten, wobei N eine natürliche Zahl größer 1 ist) an einer Ladestation und/oder einer oder mehrerer miteinander verbundener Ladestationen. Alternativ oder ergänzend umfassen die Anwendungsfälle des modularen Baukastensystems Wechselstromladestandards, Gleichstromladestandards und/oder Multistandardladestecker (beispielsweise CCS, CCS-HPC und/oder CHAdeMO). Das modulare Baukastensystem des fünften Ausführungsbeispiels kann eine schnelle Inbetriebnahme und/oder Betrieb ermöglichen, insbesondere durch eine Selbst-Konfigurierung eines Steuerungsnetzwerks und eine einfache Konfigurierung und/oder Aktualisierung (englisch: "update") jeder Komponente (beispielsweise jedes Ladesteuerungsmoduls 100-S, 100-M). Das Steuerungsnetzwerk kann die Systemsteuereinheit 406 und/oder mindestens eine der Netzwerke 414 oder 416 der Fig. 4 umfassen.

Gemäß einem sechsten Ausführungsbeispiel, das mit jeder hierin offenbarten Ausführungsform und/oder jedem hierin offenbarten Ausführungsbeispiel kombinierbar ist, ist das modulare Baukastensystem des fünften Ausführungsbeispiel für alle Größenordnungen der Anwendungsfälle von einem einzelnen Ladepunkt bis zu einer eine Vielzahl von Ladestationen umfassenden Parkanlage und/oder einer Mehrzahl in einem Ladesystem zusammengefasster Parkanlagen, beispielsweise für eine Flotte von Elektrofahrzeugen eines Betreibers, anwendbar, skalierbar und/oder kombinierbar.

In jedem Ausführungsbeispiel kann die dritte Datenschnittstelle des Ladesteuerungsmoduls 100-M eine Schnittstelle gemäß einem der Standards IEC 61850, EEBUS, V2G ISO 15118, 3GPP Long Term Evolution (LTE) oder 4G, 3GPP New Radio oder 5G, Ethernet und/oder USB-OTG umfassen. Die Steuereinheit des Ladesteuerungsmoduls 100-M kann über die dritte Datenschnittstelle auf die Systemsteuereinheit zugreifen oder die Steuereinheit des Ladesteuerungsmoduls 100-S kann indirekt über die dritte Datenschnittstelle (beispielsweise über die erste und zweite Datenschnittstelle) auf die Systemsteuereinheit zugreifen.

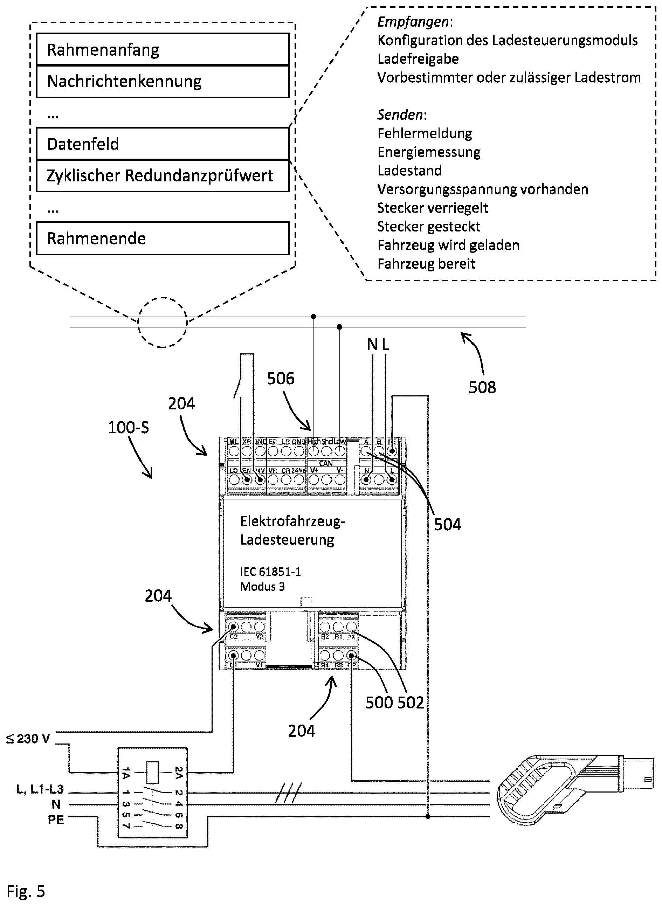

Fig. 5 zeigt ein die erste Ausführungsform, d.h. das Slave-Modul 100-S, weiterbildendes Ausführungsbeispiel des Ladesteuerungsmoduls. Der Anschlussbereich 204 für die dezentralen Funktionen (d.h., die Ladepunkt-spezifischen Funktionen) der Steuereinheit des Slave-Modul 100-S kann das Ansteuern des Ladeschütz (gezeigt unten links in Fig. 5), die Kommunikation mit dem Elektrofahrzeug über den Ladestecker (beispielsweise der Steuersignale CP am Bezugszeichen 500 und PP am Bezugszeichen 502), das Auslesen der Energiemesseinrichtung (beispielsweise über den seriellen Anschluss RS485 am Bezugszeichen 504), das Erfassen einer Verriegelungsrückmeldung der Verriegelungsmechanik des Steckers, ein Überwachen des Ladeschütz über Hilfskontakte, das Erfassen einer Ladefreigabe und/oder die Ausgabe einer Fehlermeldung.

Alternativ oder ergänzend kann über die erste Datenschnittstelle 506 für die erste Datenverbindung 508 (beispielsweise ein CAN-Bus) zwischen Ladesteuerungsmodulen 100-S und 100-M die Konfiguration des Ladesteuerungsmoduls 100-M vom Master-Modul 100-M oder der Systemsteuerung empfangen werden. Die Konfiguration kann einen vorbestimmten oder zulässigen Ladestrom angeben, den die Steuereinheit durch Pulsweitenmodulation des Steuersignals CP an das Elektrofahrzeug kommuniziert. Alternativ oder ergänzend kann die Steuereinheit des Slave-Moduls 100-S dazu ausgebildet sein, den konfigurierten Ladestrom mit einer im Steuersignal PP kodierten (beispielsweise als Widerstandswert kodierten) Stromtragfähigkeit zu vergleichen, und beispielsweise bei einer Inkompatibilität zwischen Stromtragfähigkeit und Ladestrom die Fehlermeldung auszugeben.

Alternativ oder ergänzend empfängt die Steuereinheit des Slave-Moduls 100-S vom Master-Modul 100-M oder von der Systemsteuerung die Ladefreigabe.

Alternativ oder ergänzend ist die Steuereinheit des Slave-Moduls 100-S dazu ausgebildet, die Fehlermeldung, die gemessene Energie des Ladevorgangs, einen Ladezustand des Traktionsenergiespeichers, das Anliegen einer Versorgungsspannung (beispielsweise als Trigger für das Empfangen der Konfiguration) und/oder eine Kennung des Slave-Moduls 100-S über die erste Datenschnittstelle 506 an das Master-Modul 100-M und/oder die Systemsteuerung zu senden.

Obwohl die Erfindung in Bezug auf exemplarische Ausführungsbeispiel beschrieben worden ist, ist für Fachkundige ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

| | |
|---|---|
| Ladesteuerungsmodul als Slave-Modul | 100-S |
| Ladesteuerungsmodul als Master-Modul | 100-M |
| Tragschienen-zugewandte Gehäuseseite | 102 |
| Tragschienen-abgewandte Gehäuseseite | 104 |
| Ausnehmung im Gehäuse zur Befestigung an einer Tragschiene, optional umfassend eine erste oder zweite Datenschnittstelle | 202 |
| Anschlussbereich für dezentrale Funktionen | 204 |
| Antenne, optional als dritte Datenschnittstelle Aufnahme für SIM-Karte oder SD-Karte, | 302 |
| optional als dritte Datenschnittstelle Anschluss für seriellen Bus, beispielsweise USB, | 304 |
| optional als dritte Datenschnittstelle | 306 |
| Ethernet-Anschluss, optional als dritte Datenschnittstelle | 308 |
| Ladestation, optional Ladesäule | 402 |
| Tragschiene, optional Hutschiene | 404 |
| Systemsteuereinheit | 406 |
| Datenverbindung zwischen Ladestationen | 408 |
| Datenverbindung zwischen Ladestation und Systemsteuereinheit Datenverbindung zwischen Systemsteuereinheit und Rechnernetzwerk, | 410 |
| optional ein Internetzugang | 412 |
| Teil-Netzwerk | 414 |
| Rechnernetzwerk, optional Cloud oder Internet Datenverbindung zwischen Master-Modul und Rechnernetzwerk, | 416 |
| optional ein Internetzugang | 418 |
| Signal "Control Pilot" (CP) | 500 |
| Signal "Proximity Pilot" (PP) | 502 |
| Anschluss für seriellen Bus einer dezentralen Funktion | 504 |
| Anschluss für seriellen Bus einer dezentralen Funktion | 504 |
| Erste Datenschnittstelle | 506 |
| Datenverbindung zwischen Slave-Modul und Master-Modul | 508 |

## Patentansprüche

1. Ladesteuerungsmodul (100-S; 100-M) zum Steuern eines Ladevorgangs eines Traktionsenergiespeichers an einem Ladepunkt für ein Elektrofahrzeug, umfassend:
ein Gehäuse:
eine am oder im Gehäuse angeordnete erste Datenschnittstelle (202), die dazu ausgebildet ist, mit einer Zentralfunktion für eine Mehrzahl von Ladesteuerungsmodulen (100-S; 100-M) Daten des Ladevorgangs auszutauschen; und
eine im Gehäuse angeordnete Steuereinheit, die dazu ausgebildet ist, den Ladevorgang des Traktionsenergiespeichers abhängig von den über die erste Datenschnittstelle (202) mit der Zentralfunktion ausgetauschten Daten des Ladevorgangs zu steuern,
**dadurch gekennzeichnet, dass** das Gehäuse auf einer Tragschiene (404) montierbar ist, wobei die Mehrzahl von Ladesteuerungsmodulen (100-S; 100-M) das die Zentralfunktion umfassende Ladesteuerungsmodul (100-M) und mindestens ein weiteres Ladesteuerungsmodule (100-S) ohne Zentralfunktion umfasst; und
wobei eine am Gehäuse angeordnete zweite Datenschnittstelle (202), die mit der ersten Datenschnittstelle (202) des mindestens einen weiteren Ladesteuerungsmoduls (100-S) verbindbar ist, und die dazu ausgebildet ist, die Daten des Ladevorgangs des mindestens einen weiteren Ladesteuerungsmoduls (100-S) mit der Zentralfunktion auszutauschen.

2. Ladesteuerungsmodul (100-S; 100-M) nach Anspruch 1, wobei das Gehäuse eine Ausnehmung (202) zur Montage auf der Tragschiene (404) umfasst.

3. Ladesteuerungsmodul (100-S; 100-M) nach Anspruch 1 oder 2, wobei die Tragschiene (404) einen Datenbus umfasst und die erste Datenschnittstelle (202) dazu ausgebildet ist, beim Montieren des Gehäuses auf der Tragschiene (404) den Datenbus zum Austausch der Daten mit der Zentralfunktion zu kontaktieren.

4. Ladesteuerungsmodul (100-S; 100-M) nach einem der Ansprüche 1 bis 3, wobei die Steuereinheit eine Stromsteuereinheit umfasst, die dazu ausgebildet ist, einen Ladestrom des Traktionsenergiespeichers beim Ladevorgang in Reaktion auf oder nach Maßgabe der ausgetauschten Daten von der Zentralfunktion zu steuern.

5. Ladesteuerungsmodul (100-S; 100-M) nach Anspruch 4, wobei die Stromsteuereinheit dazu ausgebildet ist, einen Gleichstrom und/oder einen Wechselstrom als Ladestrom zu steuern.

6. Ladesteuerungsmodul (100-S; 100-M) nach einem der Ansprüche 1 bis 5, wobei die Steuereinheit eine Verriegelungssteuerung umfasst, die dazu ausgebildet ist, einen Aktor einer Verriegelungsmechanik eines dem Ladepunkt zugeordneten Ladesteckers nach Maßgabe der Zentralfunktion zwischen einer verriegelten Stellung des Ladesteckers und einer entriegelten Stellung des Ladesteckers zu steuern.

7. Ladesteuerungsmodul (100-M) nach einem der Ansprüche 1 bis 6, wobei die Tragschiene (404) einen Datenbus umfasst und die zweite Datenschnittstelle (202) dazu ausgebildet ist, beim Montieren des Gehäuses auf der Tragschiene (404) den Datenbus zum Austausch der Daten mit dem mindestens einen weiteren Ladesteuerungsmodul (100-S) zu kontaktieren.

8. Ladesteuerungsmodul (100-M) nach einem der Ansprüche 1 bis 7, ferner umfassend eine dritte Datenschnittstelle (302; 304; 306; 308) zur Kommunikation mit einer Benutzerschnittstelle, einer Steuereinheit des Elektrofahrzeugs und/oder einer Systemsteuereinheit eines Ladesystems umfassend eine Vielzahl von Ladestationen, wobei jede Ladestation mindestens ein Ladesteuerungsmodul (100-M) umfasst.

9. Ladestation (402) mit einer Mehrzahl von Ladepunkten jeweils für ein Elektrofahrzeug, umfassend:
eine Tragschiene (404); und
eine auf der Tragschiene (404) montierte der Mehrzahl von Ladepunkten entsprechende Mehrzahl von Ladesteuerungsmodulen (100-S; 100-M), wobei die Mehrzahl von Ladesteuerungsmodulen (100-S; 100-M) ein Ladesteuerungsmodul (100-M) mit Zentralfunktion gemäß einem der Ansprüche 1 bis 8 und mindestens ein weiteres Ladesteuerungsmodule (100-S) gemäß einem der Ansprüche 1 bis 6 umfasst.

10. Ladestation (402) nach Anspruch 9, wobei die Tragschiene (404) als Hutschiene ausgebildet ist.

11. Ladestation (402) nach Anspruch 9 oder 10, wobei die Tragschiene (404) einen Datenbus zur Austausch der Daten zwischen der zweiten Datenschnittstelle (202) des Ladesteuerungsmoduls (100-M) mit Zentralfunktion und der mindestens einen ersten Datenschnittstelle (202) des mindestens einen weiteren Ladesteuerungsmoduls (100-S) umfasst.

12. Ladestation (402) nach einem der Ansprüche 9 bis 11, ferner umfassend eine Grundplatte, wobei die Tragschiene (404) auf der Grundplatte befestigt ist.

13. Ladesystem (400) umfassend:
eine Systemsteuereinheit (406); und
eine Vielzahl von Ladestationen (402) gemäß einem der Ansprüche 9 bis 12, wobei die Vielzahl der Ladestationen (402) dazu ausgebildet ist, in Datenverbindung (410; 412-418) mit der Systemsteuereinheit (406) zu stehen.

14. Ladesystem (400) nach Anspruch 13, wobei die Systemsteuereinheit (406) über die Datenverbindung (410; 412-418) Kennungen der Ladesteuerungsmodule (100-S; 100-M) der Vielzahl von Ladestationen (402) erfasst.

15. Ladesystem (400) nach Anspruch 13 oder 14, wobei die Systemsteuereinheit (406) über die Datenverbindung (410; 412-418) eine Anordnung der Ladesteuerungsmodule (100-S; 100-M) und/oder eine Zuordnung der Ladesteuerungsmodule (100-S; 100-M) zu je einem Ladepunkt in jeder der Vielzahl der Ladestationen (402) erfasst.

## Claims

1. Charging control module (100-S; 100-M) for controlling a charging process of a traction energy storage device at a charging point for an electric vehicle, comprising:
a housing;
a first data interface (202) which is arranged on or in the housing and is designed to exchange data relating to the charging process with a central function for a plurality of charging control modules (100-S; 100-M); and
a control unit which is arranged in the housing and is designed to control the charging process of the traction energy storage device depending on the data relating to the charging process exchanged with the central function via the first data interface (202),
**characterized in that** the housing can be mounted on a support rail (404), wherein the plurality of charging control modules (100-S; 100-M) comprise the charging control module (100-M) comprising the central function and at least one further charging control module (100-S) without a central function; and
wherein a second data interface (202) which is arranged on the housing and can be connected to the first data interface (202) of the at least one further charging control module (100-S) and is designed to exchange the data relating to the charging process of the at least one further charging control module (100-S) with the central function.

2. Charging control module (100-S; 100-M) according to Claim 1, wherein the housing comprises a recess (202) for mounting on the support rail (404).

3. Charging control module (100-S; 100-M) according to Claim 1 or 2, wherein the support rail (404) comprises a data bus and the first data interface (202) is designed to contact the data bus for exchanging the data with the central function when the housing is mounted on the support rail (404).

4. Charging control module (100-S; 100-M) according to any of Claims 1 to 3, wherein the control unit comprises a current control unit which is designed to control a charging current of the traction energy storage device during the charging process in response to or in accordance with the exchanged data from the central function.

5. Charging control module (100-S; 100-M) according to Claim 4, wherein the current control unit is designed to control a direct current and/or an alternating current as charging current.

6. Charging control module (100-S; 100-M) according to any of Claims 1 to 5, wherein the control unit comprises a locking controller which is designed to control an actuator of a locking mechanism of a charging plug assigned to the charging point between a locked position of the charging plug and an unlocked position of the charging plug in accordance with the central function.

7. Charging control module (100-M) according to any of Claims 1 to 6, wherein the support rail (404) comprises a data bus and the second data interface (202) is designed to contact the data bus for exchanging the data with the at least one further charging control module (100-S) when the housing is mounted on the support rail (404).

8. Charging control module (100-M) according to any of Claims 1 to 7, further comprising a third data interface (302; 304; 306; 308) for communicating with a user interface, a control unit of the electric vehicle and/or a system control unit of a charging system comprising a multiplicity of charging stations, wherein each charging station comprises at least one charging control module (100-M).

9. Charging station (402) having a plurality of charging points each for an electric vehicle, comprising:
a support rail (404); and
a plurality of charging control modules (100-S; 100-M) mounted on the support rail (404) and corresponding to the plurality of charging points, wherein the plurality of charging control modules (100-S; 100-M) comprise a charging control module (100-M) with a central function according to any of Claims 1 to 8 and at least one further charging control module (100-S) according to any of Claims 1 to 6.

10. Charging station (402) according to Claim 9, wherein the support rail (404) is designed as a DIN rail.

11. Charging station (402) according to Claim 9 or 10, wherein the support rail (404) comprises a data bus for exchanging the data between the second data interface (202) of the charging control module (100-M) with a central function and the at least one first data interface (202) of the at least one further charging control module (100-S).

12. Charging station (402) according to any of Claims 9 to 11, further comprising a base plate, wherein the support rail (404) is fastened on the base plate.

13. Charging system (400) comprising:
a system control unit (406); and
a multiplicity of charging stations (402) according to any of Claims 9 to 12,
wherein the multiplicity of charging stations (402) are designed to be in data connection (410; 412-418) with the system control unit (406).

14. Charging system (400) according to Claim 13, wherein the system control unit (406) detects identifiers of the charging control modules (100-S; 100-M) of the multiplicity of charging stations (402) via the data connection (410; 412-418).

15. Charging system (400) according to Claim 13 or 14, wherein the system control unit (406) detects an arrangement of the charging control modules (100-S; 100-M) and/or an assignment of the charging control modules (100-S; 100-M) to in each case one charging point in each of the multiplicity of charging stations (402) via the data connection (410; 412-418).

## Revendications

1. Module de commande de charge (100-S ; 100-M) pour commander un processus de charge d'un accumulateur d'énergie de traction sur un point de charge pour un véhicule électrique, comprenant :
un boîtier ;
une première interface de données (202) disposée sur ou dans le boîtier, qui est formée pour échanger des données du processus de charge avec une fonction centrale pour une multitude de modules de commande de charge (100-S ; 100-M) ; et
une unité de commande disposée dans le boîtier, qui est formée pour commander le processus de charge de l'accumulateur d'énergie de traction en fonction des données du processus de charge échangées avec la fonction centrale par la première interface de données (202),
**caractérisé en ce que** le boîtier peut être monté sur un rail de support (404), la multitude de modules de commande de charge (100-S ; 100-M) comprenant le module de commande de charge (100-M) comprenant la fonction centrale et au moins un autre module de commande de charge (100-S) sans fonction centrale ; et
une deuxième interface de données (202) disposée sur le boîtier et pouvant être reliée à la première interface de données (202) de l'au moins un autre module de commande de charge (100-S) et étant formée pour échanger les données du processus de charge de l'au moins un autre module de commande de charge (100-S) avec la fonction centrale.

2. Module de commande de charge (100-S ; 100-M) selon la revendication 1, le boîtier comprenant un évidement (202) pour le montage sur le rail de support (404).

3. Module de commande de charge (100-S ; 100-M) selon la revendication 1 ou 2, le rail de support (404) comprenant un bus de données et la première interface de données (202) étant formée pour établir un contact avec le bus de données pour échanger les données avec la fonction centrale lorsque le boîtier est monté sur le rail de support (404).

4. Module de commande de charge (100-S ; 100-M) selon l'une des revendications 1 à 3, l'unité de commande comprenant une unité de commande de courant qui est formée pour commander un courant de charge de l'accumulateur d'énergie de traction pendant le processus de charge en réponse aux données échangées depuis la fonction centrale ou conformément à celles-ci.

5. Module de commande de charge (100-S ; 100-M) selon la revendication 4, l'unité de commande de courant étant formée pour commander un courant continu et/ou un courant alternatif en tant que courant de charge.

6. Module de commande de charge (100-S ; 100-M) selon l'une des revendications 1 à 5, l'unité de commande comprenant une commande de verrouillage qui est formée pour commander un actionneur d'un mécanisme de verrouillage d'une fiche de charge associée au point de charge conformément à la fonction centrale entre une position verrouillée de la fiche de charge et une position déverrouillée de la fiche de charge.

7. Module de commande de charge (100-M) selon l'une des revendications 1 à 6, le rail de support (404) comprenant un bus de données et la deuxième interface de données (202) étant formée pour établir un contact avec le bus de données pour échanger les données avec l'au moins un autre module de commande de charge (100-S) lorsque le boîtier est monté sur le rail de support (404).

8. Module de commande de charge (100-M) selon l'une des revendications 1 à 7, comprenant en outre une troisième interface de données (302 ; 304 ; 306 ; 308) pour communiquer avec une interface utilisateur, une unité de commande du véhicule électrique et/ou une unité de commande de système d'un système de charge comprenant une pluralité de stations de charge, chaque station de charge comprenant au moins un module de commande de charge (100-M) .

9. Station de charge (402) avec une multitude de points de charge respectivement pour un véhicule électrique, comprenant :
un rail de support (404) ; et
une multitude de modules de commande de charge (100-S ; 100-M) montés sur le rail de support (404) correspondant à la multitude de points de charge, la multitude de modules de commande de charge (100-S ; 100-M) comprenant un module de commande de charge (100-M) avec une fonction centrale selon l'une des revendications 1 à 8 et au moins un autre module de commande de charge (100-S) selon l'une des revendications 1 à 6.

10. Station de charge (402) selon la revendication 9, le rail de support (404) étant formé comme un profilé chapeau.

11. Station de charge (402) selon la revendication 9 ou 10, le rail de support (404) comprenant un bus de données pour échanger les données entre la deuxième interface de données (202) du module de commande de charge (100-M) avec une fonction centrale et l'au moins une première interface de données (202) de l'au moins un autre module de commande de charge (100-S).

12. Station de charge (402) selon l'une des revendications 9 à 11, comprenant en outre une plaque de base, le rail de support (404) étant fixé sur la plaque de base.

13. Système de charge (400) comprenant :
une unité de commande de système (406) ; et
une pluralité de stations de charge (402) selon l'une des revendications 9 à 12,
la pluralité des stations de charge (402) étant formée pour être en liaison de données (410 ; 412-418) avec l'unité de commande de système (406).

14. Système de charge (400) selon la revendication 13, l'unité de commande de système (406) détectant des identifiants des modules de commande de charge (100-S ; 100-M) de la pluralité de stations de charge (402) par la liaison de données (410 ; 412-418).

15. Système de charge (400) selon la revendication 13 ou 14, l'unité de commande de système (406) détectant, par la liaison de données (410 ; 412-418), un ensemble des modules de commande de charge (100-S ; 100-M) et/ou une association des modules de commande de charge (100-S ; 100-M) respectivement à un point de charge dans chacune de la pluralité des stations de charge (402).
